# EUROPEAN PATENT APPLICATION

(11) **EP 4 697 242 A1**
(43) Date of publication of application: **18.02.2026**
(21) Application number: 25194691.9
(22) Date of filing: 07.08.2025
(51) Int. Cl.: G06N 10/20, G06N 10/40

(54) **CONTROLLER, INFORMATION PROCESSING APPARATUS AND METHOD**

(30) Priority: 16.08.2024 JP 2024135867
(71) Applicant: FUJITSU LIMITED, Kawasaki-shi, Kanagawa 211-8588 (JP)
(72) Inventor: KAWASHITA, Mitsuya, Kawasaki-shi, 211-8588 (JP)
(74) Representative: Haseltine Lake Kempner LLP

(57) **Abstract**

A controller includes a control circuit configured to output a control signal to cause cross-resonance between a plurality of qubits that are placed on different chips, to one of the plurality of qubits, a read circuit configured to output readout signals for performing readout from the plurality of qubits to the respective qubits; and an adjustment circuit configured to adjust an interval between an output of the control signal and outputs of the readout signals based on a delay between the plurality of qubits.

## Description

### FIELD

The embodiments discussed herein are related to controllers, information processing apparatuses and methods.

### BACKGROUND

Computer systems including a plurality of lattices on the same substrate have been known, and each lattice has a configuration in which a plurality of qubits are placed vertically and horizontally. Such a computer system performs operations using the plurality of lattices by connecting facing qubits between adjacent lattices, as described in International Publication Pamphlet No. 2022/004274, for example.

As a qubit logic gate used in quantum computers, there is a cross-resonance gate that couples a plurality of qubits. In a configuration in which the plurality of qubits for cross-resonance coupling are placed on the same chip, the coupling between the plurality of qubits for cross-resonance coupling is closed within the same chip, which may result in a relatively small transmission delay between these qubits.

In a configuration in which the plurality of qubits for cross-resonance coupling are placed on different chips, the transmission delay between the plurality of qubits for cross-resonance coupling may become large. In this case, it may be difficult to optimize (create) a control timing for cross-resonance between qubits or a readout timing from the qubits.

### SUMMARY

According to one aspect of the embodiments, it is an object in one aspect of the embodiments to provide a controller capable of optimizing a control timing for cross-resonance between qubits or a readout timing from qubits, in a configuration where a plurality of qubits for cross-resonance coupling are placed on different chips.

According to one aspect of the embodiments, a controller includes a control circuit configured to output a control signal to cause cross-resonance between a plurality of qubits that are placed on different chips, to one of the plurality of qubits; a read circuit configured to output readout signals for performing readout from the plurality of qubits to the respective qubits; and an adjustment circuit configured to adjust an interval between an output of the control signal and outputs of the readout signals based on a delay between the plurality of qubits.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1 is a diagram for describing a cross-resonance gate;
FIG. 2 is a diagram illustrating a configuration example of an information processing apparatus according to a first embodiment;
FIG. 3 is a timing chart illustrating a first comparative example when both a control timing and a readout timing are fixed without adjustment;
FIG. 4 is a timing chart illustrating a second comparative example when both the control timing and the readout timing are fixed without adjustment;
FIG. 5 is a timing chart illustrating an example of adjusting the control timing and the readout timing;
FIG. 6 is a diagram illustrating a specific configuration example of a controller according to the first embodiment;
FIG. 7 is a flowchart illustrating an example of a method for adjusting the control timing and the readout timing;
FIG. 8 is a diagram illustrating a configuration example of the information processing apparatus according to a second embodiment; and
FIG. 9 is a diagram illustrating a hardware configuration example of the controller.

### DESCRIPTION OF EMBODIMENTS

Preferred embodiments of the present invention will be described with reference to the accompanying drawings.

First, a quantum computer and a cross-resonance gate will be described.

The quantum computer includes a plurality of qubits that form both a single-qubit logic gate such as a Pauli gate and a two-qubit logic gate such as a CNOT gate. The quantum computer performs calculations using these qubit logic gates. As an example of the two-qubit logic gate, there is a cross-resonance gate that induces quantum entanglement.

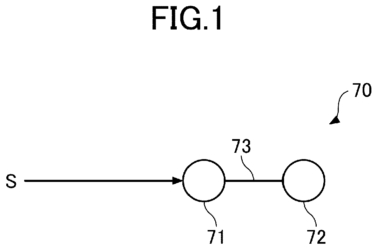

FIG. 1 is a diagram for describing the cross-resonance gate. A cross-resonance gate 70 includes a control qubit 71 to which a control signal S is input, and includes a target qubit 72 coupled to the control qubit 71 via a transmission line 73. The control qubit 71 and the target qubit 72 have different resonance frequencies (also called "resonance frequencies" or "natural frequencies").

The control signal S for operating the cross-resonance gate that couples the control qubit 71 and the target qubit 72 is input to the control qubit 71. In the cross-resonance gate, the control signal S having the same frequency as the frequency (resonance frequency) at which the target qubit 72 resonates is input to the control qubit 71 in order to induce quantum entanglement between the adjacent control qubit 71 and the target qubit 72. In this arrangement, a state of the target qubit 72 changes according to a quantum state of the control qubit 71. The control signal S is, for example, a microwave.

Hereinafter, an information processing apparatus that performs operations using the cross-resonance gate will be described.

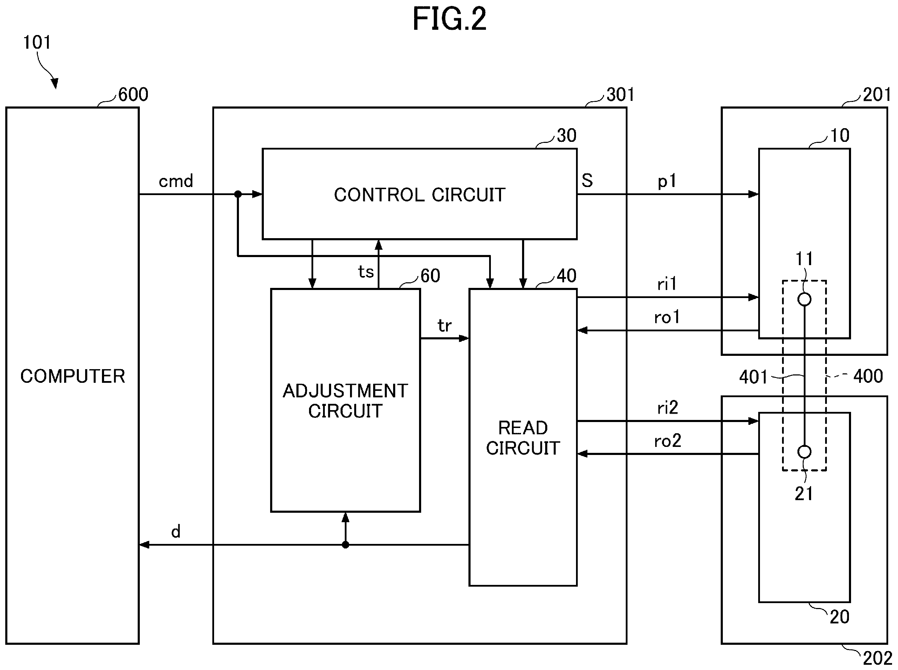

FIG. 2 is a diagram illustrating a configuration example of the information processing apparatus according to a first embodiment. An information processing apparatus 101 illustrated in FIG. 2 includes a plurality of qubits (hereinafter may be also referred to as "a plurality of qubits q") that include a first qubit 11 and a second qubit 21. The information processing apparatus 101 is a quantum computer that processes information using the plurality of qubits q, and externally outputs the processing results. In FIG. 2, the illustration of qubits other than the first qubit 11 and the second qubit 21, among the plurality of qubits q, is omitted.

The information processing apparatus 101 operates the first qubit 11 and the second qubit 21 as a cross-resonance gate 400. In this example, when the first qubit 11 and the second qubit 21 are operated as a cross-resonance gate 400, the first qubit 11 operates as a control qubit, and the second qubit 21 operates as a target qubit.

The first qubit 11 and the second qubit 21 are placed on different chips. The first qubit 11 is placed on a first chip 10. The second qubit 21 is placed on a second chip 20. The first chip 10 is a substrate provided with a plurality of qubits including the first qubit 11. The second chip 20 is a substrate provided with a plurality of qubits including the second qubit 21.

The first qubit 11 and the second qubit 21 are superconducting qubits such as transmons, but are not limited to the superconducting qubits.

The information processing apparatus 101 includes a first cooling apparatus 201, a second cooling apparatus 202, an external line 401, a computer 600, and a controller 301. The computer 600 may not be included in components of the information processing apparatus 101.

The first cooling apparatus 201 cools the first qubit 11. The first cooling apparatus 201 has a chamber that accommodates the first chip 10 on which the first qubit 11 is placed, and cools the first chip 10 in the chamber together with the first qubit 11. The second cooling apparatus 202 cools the second qubit 21. The second cooling apparatus 202 has a chamber that accommodates the second chip 20 on which the second qubit 21 is placed, and cools the second chip 20 in the chamber together with the second qubit 21. The first cooling apparatus 201 and the second cooling apparatus 202 are, for example, dilution refrigerators that utilize dilution cooling effects produced when liquid helium 3 is diluted in liquid helium 4. The first cooling apparatus 201 or the second cooling apparatus 202 may be a device that cools qubits by other cooling systems.

The external line 401 connects the first cooling apparatus 201 and the second cooling apparatus 202. The external line 401 has portions exposed outside the first cooling apparatus 201 and the second cooling apparatus 202. As a specific example of the external line 401, a coaxial cable or the like is used. The first qubit 11 in the first cooling apparatus 201 and the second qubit 21 in the second cooling apparatus 202 are coupled via the external line 401.

The computer 600 is a host computer that controls the qubits q. The computer 600 generates a command cmd to control the qubits q, and transmits the command cmd to the controller 301. The computer 600 receives data d representing a read result of the qubits q, from the controller 301. The computer 600 processes the data d, and outputs a processing result to an external device such as a display. The computer 600 is connected to the controller 301 by wire or wirelessly.

The controller 301 generates a plurality of signals for the plurality of qubits q according to the command cmd that is input from the computer 600, and outputs the signals to the first cooling apparatus 201 and the second cooling apparatus 202 via one or more lines. After outputting the plurality of signals for the plurality of qubits q, the controller 301 acquires the read result of the qubits q via one or more lines. The controller 301 outputs the data d representing the read result of the qubits q that are acquired via the one or more lines, to the computer 600.

The controller 301 includes a control circuit 30, a read circuit 40, and an adjustment circuit 60.

The control circuit 30 generates the signals for the qubits q, and outputs the signals to the one or more lines according to the command cmd that is input from the computer 600. The control circuit 30 performs cross-resonance control between the qubits (the first qubit 11 and the second qubit 21) that are placed on the different chips.

In the cross-resonance control between the first qubit 11 and the second qubit 21, the control circuit 30 generates and outputs a control signal S for operating the first qubit 11 and the second qubit 21 as a cross-resonance gate 400. The control signal S includes, for example, a drive pulse p1. The drive pulse p1 is a microwave pulse having the same frequency as a frequency (resonance frequency) at which the second qubit 21 resonates. The drive pulse p1 is input to the first qubit 11.

The read circuit 40 reads out a plurality of qubits q. The read circuit 40 reads out respective states corresponding to the input of the control signal S, from the first qubit 11 and the second qubit 21.

The read circuit 40 generates and outputs a read-in signal ri1 for reading out a state of the first qubit 11. The read circuit 40 receives a readout signal ro1 representing the result of reading out the state of the first qubit 11, in response to the input of the read-in signal ri1. Based on the readout signal ro1, the read circuit 40 outputs data d representing the result of reading out the state of the first qubit 11, to the computer 600.

Similarly, the read circuit 40 generates and outputs a read-in signal ri2 for reading out a state of the second qubit 21. The read circuit 40 receives a readout signal ro2 representing the result of reading out the state of the second qubit 21, in response to the input of the read-in signal ri2. Based on the readout signal ro2, the read circuit 40 outputs data d representing the result of reading out the state of the second qubit 21, to the computer 600.

The adjustment circuit 60 adjusts either or both of a control timing ts for performing the cross-resonance control between the first qubit 11 and the second qubit 21, and a readout timing tr for the first qubit 11 and the second qubit 21.

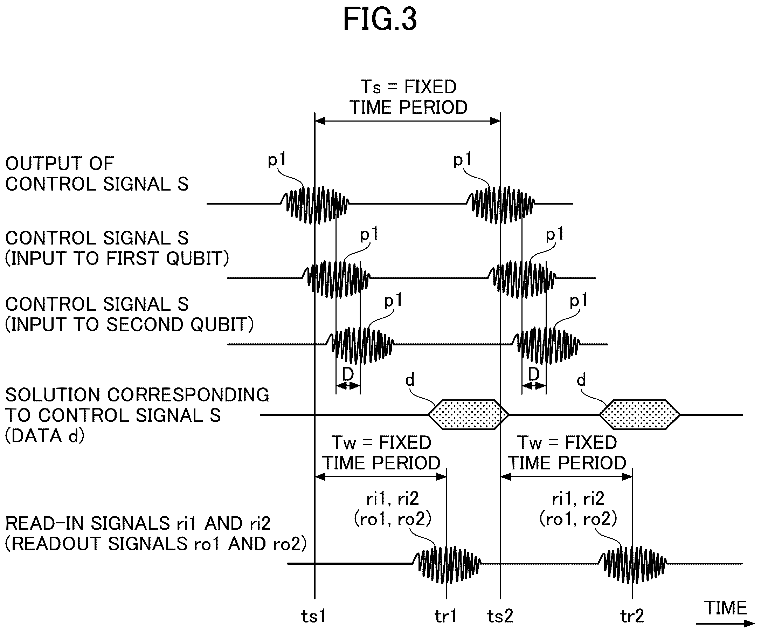

FIG. 3 is a timing chart illustrating a first comparison example when both the control timing ts and the readout timing tr are fixed without adjustment. A waiting time period Tw represents a time from when the control circuit 30 outputs the control signal S (drive pulse p1) until when the read circuit 40 outputs the read-in signals ri1 and ri2 or receives the readout signals ro1 and ro2.

The control circuit 30 performs the cross-resonance control between the first qubit 11 and the second qubit 21 at a control interval Ts. In FIG. 3, ts1 and ts2 correspond to control timings ts at which the cross-resonance control is performed. In this example, each of ts1 and ts2 represents a timing of outputting the control signal S (drive pulse p1). The read circuit 40 performs the readout from the first qubit 11 and the second qubit 21 after the waiting time period Tw has elapsed. Here, tr1 and tr2 correspond to readout timings tr at which the readout is performed. In this example, each of tr1 and tr2 represents a timing of outputting the read-in signals ri1 and ri2, or a timing of receiving the readout signals ro1 and ro2.

In FIG. 3, the control timings ts are fixed, and in this case, the control interval Ts is a fixed time period (invariant time period). The readout timings tr are fixed, and in this case, each waiting time period Tw is a fixed time period (invariant time period).

The control circuit 30 outputs a drive pulse p1 of the control signal S in each gate operation. In this arrangement, quantum information of the first qubit 11 propagates to the second qubit 21, and the state of the second qubit 21 changes according to a quantum state of the first qubit 11. For example, when the state of the first qubit 11 is 0, the state of the second qubit 21 does not change. On the other hand, when the state of the first qubit 11 is 1, the state of the second qubit 21 is reversed.

A transmission delay (delay D of information propagation) occurs between the first qubit 11 and the second qubit 21. In each gate operation, in consideration of the occurrence and variation of the delay D, the read circuit 40 receives the readout signals ro1 and ro2 after outputting the read-in signals ri1 and ri2, and then the read circuit 40 reads out a solution (data d) corresponding to the drive pulse p1 of the control signal S.

However, if the first qubit 11 and the second qubit 21 are placed on different chips, an information propagation path between the two bits becomes longer than when these qubits are placed on the same chip, and as a result, the delay D and its variation increase. As the delay D increases, a timing at which the state of each qubit is determined in response to the input of the control signal S is extended. In such a case, when the waiting time period Tw is the fixed time, depending on a timing for the readout, a correct solution might not be obtained, which may result in decreased readout accuracy.

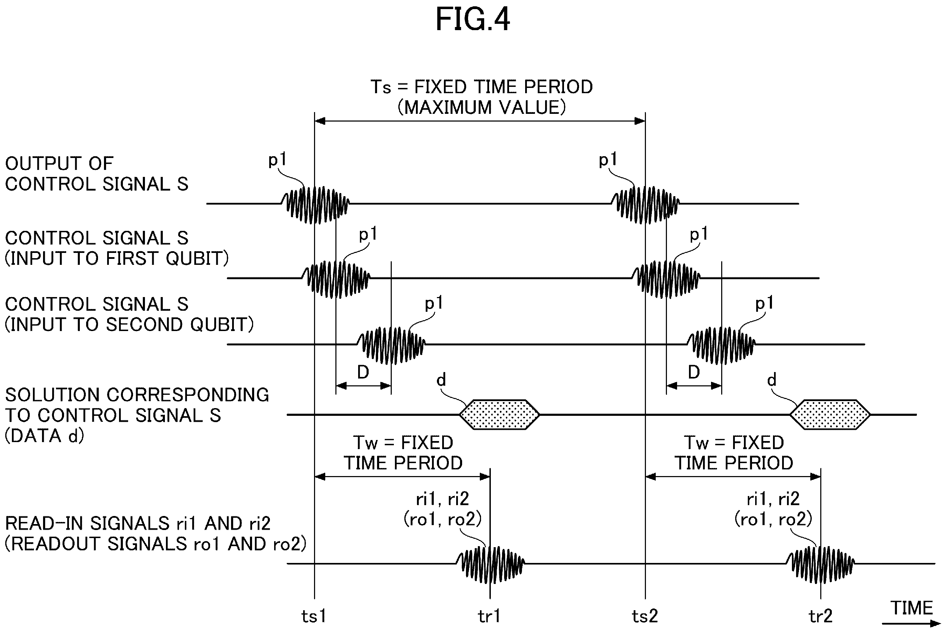

FIG. 4 is a timing chart illustrating a second comparison example in which both the control timing ts and the readout timing tr are fixed without adjustment. FIG. 4 shows a case in which the delay D increases compared with FIG. 3. In FIG. 4, in order to obtain a correct solution based on the control signal S, the waiting time period Tw is set to a fixed time period considering the increased delay D. However, in order to obtain the correct solution based on the control signal S even if the delay D becomes maximum due to aging or environmental changes, the control interval Ts is set to a maximum fixed time period considering a maximum value of the delay D. As a result, a time period required to obtain the correct solution based on the control signal S increases, and it may be difficult to reduce the computation time (speed up operations) of an information processing apparatus.

In view of the above situation, the controller 301 according to the first embodiment includes an adjustment circuit 60 that adjusts either or both of the control timing ts and the readout timing tr to be reduced or extended according to a result of measuring the delay D between the first qubit 11 and the second qubit 21.

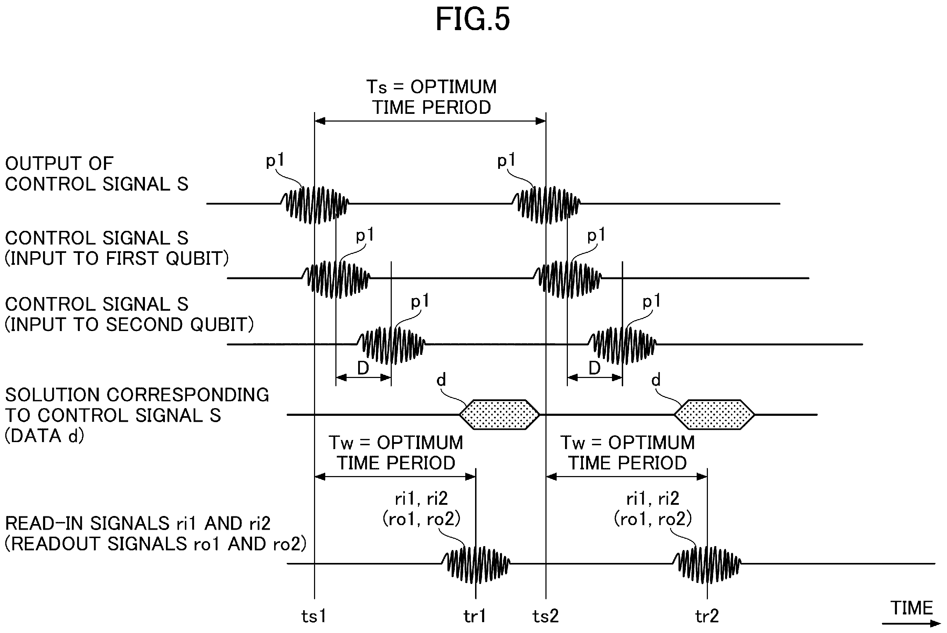

FIG. 5 is a timing chart illustrating an example of adjusting the control timing ts and the readout timing tr.

The adjustment circuit 60 may measure the delay D, and reduce or extend the readout timing tr (for example, the output timing of the read-in signals ri1 and ri2) according to the measurement result of the delay D. By measuring the delay D, the adjustment circuit 60 can adjust the readout timing tr to an optimum timing according to an actual variation in the delay D, and thus the waiting time period Tw can be adjusted to an optimum time period according to the actual variation in the delay D. Since the readout timing tr and the waiting time period Tw are optimized at optimum values, the read circuit 40 can obtain the correct solution according to the input of the control signal S. As a result, readout accuracy of each state of the first qubit 11 and the second qubit 21 is improved.

The adjustment circuit 60 may measure the delay D and adjust the control timing ts (for example, a timing of outputting the drive pulse p1 of the control signal S) to be reduced or extended according to a measurement result of the delay D. By measuring the delay D, the adjustment circuit 60 can adjust the control timing ts to the optimum timing according to the actual variation in the delay D, and as a result, the control interval Ts can be adjusted to an optimum time period according to the actual variation in the delay D. Since the control timing ts and the control interval Ts are optimized at optimum values, the read circuit 40 can obtain the correct solution according to the input of the control signal S. As a result, the readout accuracy of each state of the first qubit 11 and the second qubit 21 is improved. Further, the adjustment circuit 60 can reduce the control interval Ts to an optimum time period in which the correct solution is obtained according to the input of the control signal S, and thus the computational time of the controller 301 and the information processing apparatus 101 is reduced, and an operational speed increases.

The adjustment circuit 60 may adjust the readout timing tr to be shortened or extended according to the measurement result of the delay D, while maintaining the control interval Ts at a fixed time without adjusting the control timing ts. In this arrangement, as described above, the readout accuracy of each state of the first qubit 11 and the second qubit 21 is improved.

Alternatively, the adjustment circuit 60 may adjust the control timing ts to be reduced or extended according to the measurement result of the delay D, while maintaining the waiting time period Tw at a fixed time period without adjusting the readout timing tr. In this arrangement, as described above, the readout accuracy of each state of the first qubit 11 and the second qubit 21 is improved.

The waiting time period Tw is set in consideration of the delay D. The adjustment circuit 60 can set an appropriate waiting time period Tw by specifying a time period of the delay D. In order to specify a delay time period D, the adjustment circuit 60 measures values of the readout signals ro1 and ro2, for example, by changing a time interval from an output time of the control signal S to an output time of the read-in signals ri1 and ri2, to various values. Then, by identifying a time interval at which the values of the readout signals ro1 and ro2 match the expected values described later, the adjustment circuit indirectly determines the delay time period D.

The adjustment circuit 60 may adjust the readout timing tr to a timing at which the data d obtained by the actual readout of each state of the first qubit 11 and the second qubit 21 matches an expected value that should be obtained in response to the input of the control signal S (drive pulse p1). The expected value that should be obtained in response to the input of the control signal S (drive pulse p1) is hereinafter referred to as an "expected value X". The adjustment circuit 60 adjusts the readout timing tr (for example, the waiting time period Tw) to a first readout timing (for example, a first waiting time period) at which the data d matches the expected value X, thereby improving the readout accuracy of each state of the first qubit 11 and the second qubit 21.

The adjustment circuit 60 may change the readout timing tr within a predetermined first time range, and may set the readout timing tr to a first readout timing at which the data d matches the expected value X within the first time range. In this arrangement, an optimum first readout timing can be extracted within the first time range. For example, the adjustment circuit 60 sets the readout timing tr to a median value of a period in which the data d matches the expected value X.

The adjustment circuit 60 may adjust the control timing ts to a time when the data d obtained by actual readout of each state of the first qubit 11 and the second qubit 21 matches the expected value X that should be obtained in response to the input of the control signal S (drive pulse p1). The adjustment circuit 60 adjusts the control timing ts (for example, the control interval Ts) to a first control timing (for example, a first control interval) at which the data d matches the expected value X, thereby further improving the readout accuracy of each state of the first qubit 11 and the second qubit 21.

The adjustment circuit 60 may change the control timing ts within a predetermined second time range, and may set the control timing ts to a first control timing at which the data d matches the expected value X within the second time range. As a result, an optimum first control timing can be extracted within the second time range. For example, the adjustment circuit 60 sets the control timing ts to a minimum value of a period in which the data d matches the expected value X. As a result, the adjustment circuit 60 can reduce the control interval Ts to an optimum minimum time period in which a correct solution is obtained in response to the input of the control signal S, thereby reducing the computational time of the controller 301 and the information processing apparatus 101, and increasing the operational speed.

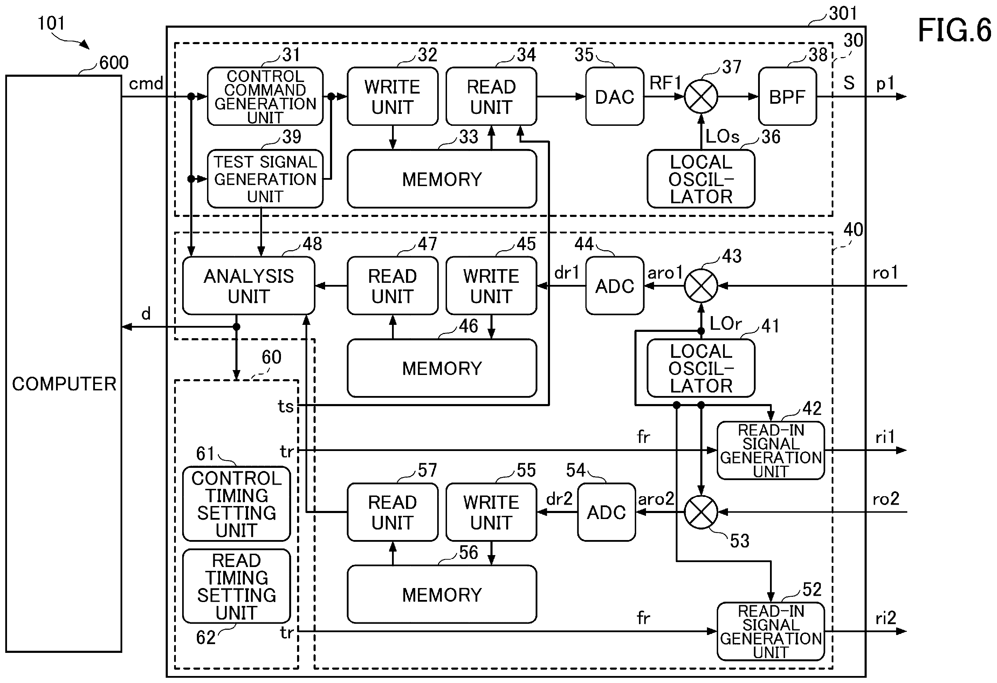

FIG. 6 is a diagram illustrating a specific configuration example of the controller according to the first embodiment. The controller 301 includes the control circuit 30, the read circuit 40, and the adjustment circuit 60.

The control circuit 30 includes a generation unit 31, a generation unit 39, a write unit 32, a memory 33, a read unit 34, a digital analog converter (DAC) 35, a local oscillator 36, a mixer 37, and a bandpass filter (BPF) 38.

The generation unit 31 generates a control command for controlling the state of a plurality of quantum bits q, according to the command cmd that is input from the computer 600. The generation unit 39 generates a test signal for operating the cross-resonance gate 400 (FIG. 2) as a predetermined qubit logic gate (such as a CNOT gate), according to the command cmd input from the computer 600. The test signal is a signal for calibration of the readout timing tr or the control timing ts.

The write unit 32 temporarily writes the control command or the test signal to the memory 33. The read unit 34 reads the control command or the test signal from the memory 33 according to the control timing ts that is set by a control timing setting unit 61 in the adjustment circuit 60, and outputs the read control command or the test signal to the DAC 35. In this arrangement, the read unit 34 outputs the control command or test signal to the DAC 35 according to the control timing ts set by the control timing setting unit 61 in the adjustment circuit 60.

The DAC 35 is a circuit that converts a digital control command or test signal into an analog signal RF1 corresponding to the control command or test signal. The local oscillator 36 generates a local oscillation signal LOs having a higher frequency than the analog signal RF1. The mixer 37 up-converts the analog signal RF1 to the control signal S that corresponds to the control command or test signal, by multiplying the analog signal RF1 with the local oscillation signal LOs. The bandpass filter 38 attenuates the noise of the control signal S. The control circuit 30 outputs the control signal S including the drive pulse p1 that corresponds to the control command or test signal.

The read circuit 40 includes a local oscillator 41, generation units 42 and 52, mixers 43 and 53, analog digital converters (ADCs) 44 and 54, write units 45 and 55, memories 46 and 56, read units 47 and 57, and an analysis unit 48.

The local oscillator 41 generates a local oscillation signal LOr whose frequency is higher than an intermediate frequency signal fr generated by the adjustment circuit 60. The generation unit 42 up-converts the intermediate frequency signal fr to the read-in signal ri1 by multiplying the intermediate frequency signal fr with the local oscillation signal LOr. The generation unit 52 up-converts the intermediate frequency signal fr to the read-in signal ri2 by multiplying the intermediate frequency signal fr with the local oscillation signal LOr. The read circuit 40 outputs the read-in signals ri1 and ri2 according to the readout timing tr that is set by a readout timing setting unit 62 in the adjustment circuit 60.

The mixer 43 down-converts the readout signal ro1 to an analog signal aro1 by multiplying the readout signal ro1 with the local oscillation signal LOr. The mixer 53 down-converts the readout signal ro2 to an analog signal aro2 by multiplying the readout signal ro2 with the local oscillation signal LOr.

The ADC 44 is a circuit that converts the analog signal aro1 corresponding to the readout signal ro1 into digital readout data dr1. The ADC 54 is a circuit that converts the analog signal aro2 corresponding to the readout signal ro2 into digital readout data dr2.

The write unit 45 temporarily writes the readout data dr1 to the memory 46. The read unit 47 reads the readout data dr1 from the memory 46, and outputs the readout data dr1 to the analysis unit 48. The write unit 55 temporarily writes the readout data dr1 to the memory 56. The read unit 57 reads the readout data dr2 from the memory 56, and outputs the readout data dr2 to the analysis unit 48.

The analysis unit 48 analyzes the two pieces of readout data dr1 and dr2. The analysis unit 48 generates the data d, which is a solution obtained by the cross-resonance gate 400, from the two pieces of readout data dr1 and dr2. The analysis unit 48 outputs the data d to the computer 600 and the adjustment circuit 60.

The adjustment circuit 60 includes the control timing setting unit 61 that sets the control timing ts, and includes the readout timing setting unit 62 that sets the readout timing tr.

The setting unit 62 compares the data d, which is obtained by the analysis unit 48 based on the readout signals ro1 and ro2 in response to the input of the control signal S corresponding to the test signal, with a known expected value X that is obtained by the test signal. The readout timing setting unit 62 sets the readout timing tr to a first readout timing at which the data d matches the expected value X. For example, the readout timing setting unit 62 sets the readout timing tr to an optimum first readout timing (for example, a median time period in which the data d matches the expected value X) at which the data d matches the expected value X within a first time range in which the readout timing tr is varied.

The readout timing setting unit 62 may store a first readout timing (for example, an optimal first waiting time period as the waiting time period Tw) that is set to the readout timing tr in the memory. For subsequent readouts, the read circuit 40 may perform the readout in accordance with the first readout timing stored in the memory. In this arrangement, it is not necessary to reset the first readout timing based on the test signal every time for the subsequent readouts. As a result, the number of times the first readout timing is set is reduced, and a calibration time period for the readout timing tr is reduced.

The control timing setting unit 61 compares the data d, which is obtained by the analysis unit 48 based on the readout signals ro1 and ro2 in response to the input of the control signal S corresponding to the test signal, with the known expected value X obtained from the test signal. The control timing setting unit 61 sets the control timing ts to a first control timing at which the data d matches the expected value X. For example, the control timing setting unit 61 sets the control timing ts to an optimum first control timing (for example, a minimum value of a period in which the data d matches the expected value X) in which the data d matches the expected value X within the second time range in which the control timing ts is varied.

The control timing setting unit 61 may store a first control timing (for example, an optimal first control interval as the control interval Ts) that is set to the control timing ts in the memory. The read circuit 40 may perform control according to the first control timing stored in the memory, for subsequent readouts. In this arrangement, it is not necessary to reset the first control timing based on the test signal every time for the subsequent readouts. As a result, the number of times the first control timing is set is reduced, and a calibration time period for the control timing ts is reduced.

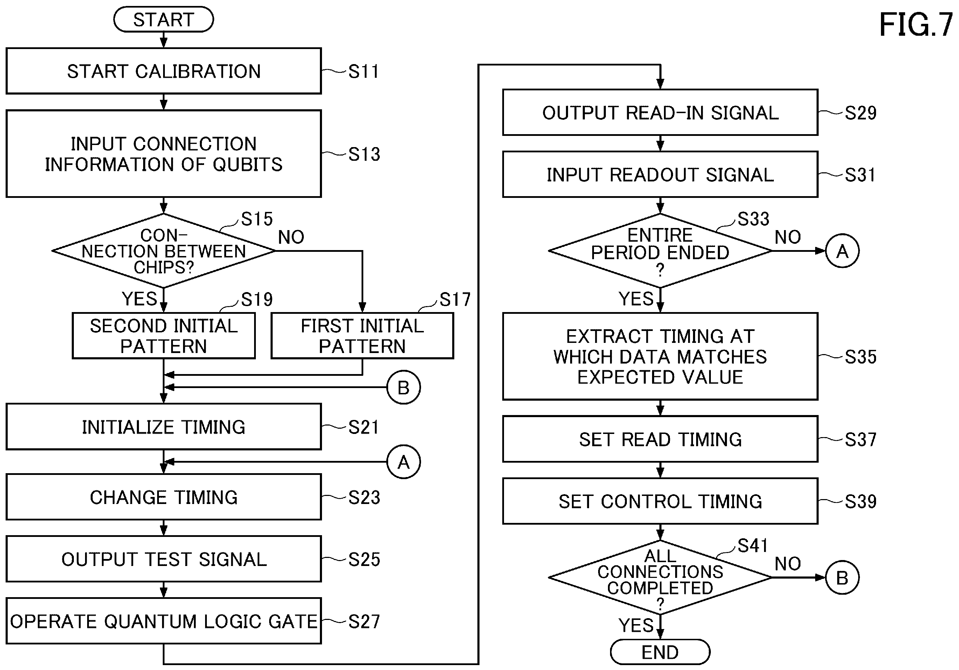

FIG. 7 is a flowchart illustrating an example of a method for adjusting the control timing ts and the readout timing rs.

In step S11, the controller 301 starts calibration in accordance with the command cmd (calibration start command) that is input from the computer 600.

In step S13, the adjustment circuit 60 acquires connection information of a plurality of qubits **q.** In step S15, the adjustment circuit 60 determines, based on the acquired connection information, whether there is an inter-chip connection between qubits for cross-resonance coupling. The process in step S15 is performed to determine whether objects for cross-resonance coupling are qubits placed on different chips. For example, if it is determined that the objects for cross-resonance coupling are the qubits placed on the different chips, the adjustment circuit 60 adjusts the control timing ts or the readout timing tr according to the result of measuring the delay D as described above.

If it is determined that there is no inter-chip connection between qubits for cross-resonance coupling, the adjustment circuit 60 refers to a first initial pattern for an initial value of each of the waiting time period Tw and the control interval Ts (step S17). The first initial pattern defines a first initial value in consideration of a maximum value of the delay D obtained when there is no inter-chip connection.

If the adjustment circuit 60 determines that there is the inter-chip connection between qubits for cross-resonance coupling, the adjustment circuit 60 refers to a second initial pattern for an initial value of each of the waiting time period Tw and the control interval Ts (step S19). The second initial pattern defines a second initial value in consideration of the maximum value of the delay D obtained when there is the inter-chip connection.

In step S21, the adjustment circuit 60 sets the initial value of each of the waiting time period Tw and the control interval Ts based on the initial pattern that is referenced based on the determination result in step S15. In step S21, the adjustment circuit 60 may initialize the intensity of the microwave of the control signal S.

In step S23, the readout timing setting unit 62 of the adjustment circuit 60 sets the readout timing tr to a timing that is changed by a predetermined amount from a currently set timing.

In step S25, the control circuit 30 outputs the control signal S that includes the drive pulse p1 corresponding to the test signal. With this approach, the cross-resonance gate 400 operates as a qubit logic gate that is identified by the test signal (step S27).

In step S29, the read circuit 40 outputs the read-in signals ri1 and ri2 according to the readout timing tr that is set in the previous step S23 by the readout timing setting unit 62 of the adjustment circuit 60.

In step S31, the analysis unit 48 derives data d, which is a solution obtained by the cross-resonance gate 400, based on the readout signals ro1 and ro2 that are received in response to the read-in signals ri1 and ri2 that are output in the previous step S29. The analysis unit 48 stores the derived data d in the memory.

In step S33, the readout timing setting unit 62 determines whether the readout timing tr has been changed over the entire predetermined first time range. If the readout timing tr has not been changed over the entire predetermined first time range, the readout timing setting unit 62 repeats the process starting from step S23. On the other hand, when the readout timing tr has not been changed over the entire predetermined first time range, the readout timing setting unit 62 executes the process of step S35.

In step S35, the readout timing setting unit 62 extracts the first readout timing at which the data d matches the expected value X within the first time range. In step S37, the readout timing setting unit 62 sets the readout timing tr to the first readout timing (for example, a median time period in which the data d matches the expected value X) extracted in step S35.

In step S39, the control timing setting unit 61 sets the control timing ts to the first control timing at which the data d matches the expected value X. For example, in the same manner as the setting process of the readout timing tr from step S23 to step S37, the control timing setting unit 61 changes the control timing ts within the predetermined second time range, and sets the control timing ts to a first control timing at which the data d matches the expected value X within the second time range.

In step S41, the adjustment circuit 60 determines whether the setting of the readout timing tr and the control timing ts has been completed for all inter-chip connections among qubits for cross-resonance coupling. If there is a connection where the readout timing tr and the control timing ts are not set, the adjustment circuit 60 repeats the process starting from step S21, for the connection with the unset readout timing tr and control timing ts.

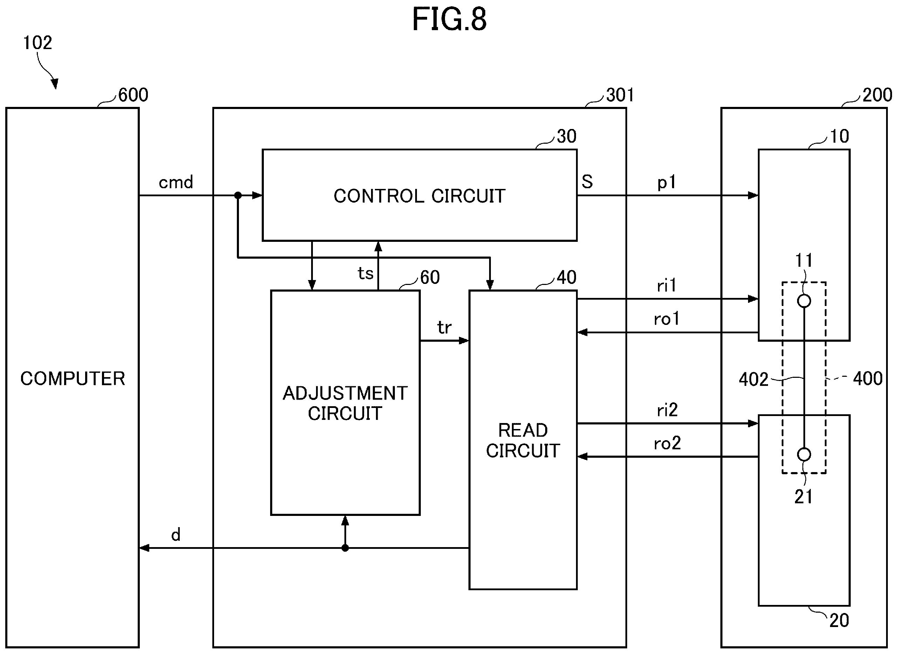

FIG. 8 is a diagram illustrating a configuration example of the information processing apparatus according to a second embodiment. In the second embodiment, description of the same configuration, operation and effect as in the first embodiment will be omitted by referring to the above description. An information processing apparatus 102 illustrated in FIG. 8 differs from the information processing apparatus 101 according to the first embodiment in that both the first chip 10 on which the first qubit 11 is placed and the second chip 20 on which the second qubit 21 is placed are cooled by a common cooling apparatus 200.

An internal line 402 connects the first chip 10 and the second chip 20 in the cooling apparatus 200. The first qubit 11 in the first chip 10 and the second qubit 21 in the second chip 20 are coupled via the internal line 402.

Even in the second embodiment, a transmission delay (delay D of information propagation) may occur between the first qubit 11 and the second qubit 21. In such a case, as in the first embodiment, the adjustment circuit 60 can optimize the control timing ts or the readout timing tr by adjusting either or both of the control timing ts and the readout timing tr according to a result of measuring the delay D.

As described above, according to the embodiments, in a configuration in which qubits for cross-resonance coupling are placed on different chips, a timing of controlling the qubits for cross-resonance coupling or a timing of reading out from the qubits can be optimized.

In each embodiment, part or all of the controller 301 is an electronic circuit such as a central processing unit (CPU), a field programmable gate array (FPGA), or an application specific integrated circuit (ASIC). Part or all of the controller 301 may be a computer having a memory and a processor. Part or all of the controller 301 executes various control operations described herein, by executing a program such as an instruction code stored in a memory or by designing a circuit for a special application.

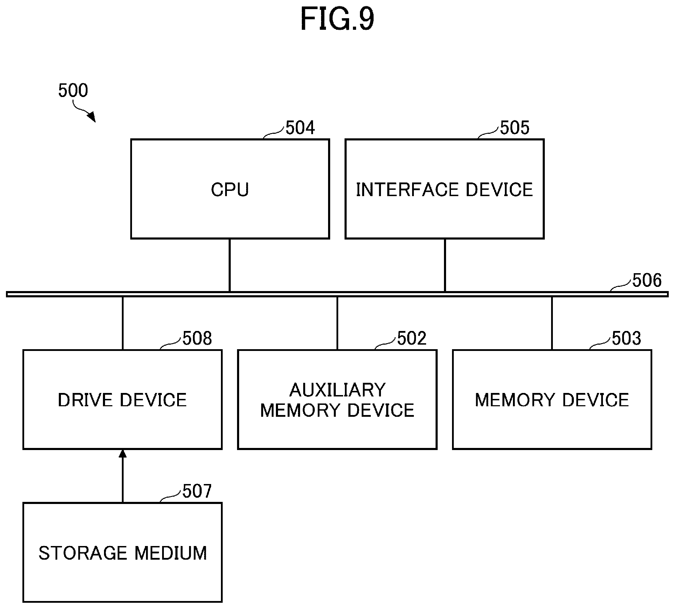

FIG. 9 is a diagram illustrating a hardware configuration example of the controller. A controller 500 corresponds to part or all of the controller 301. The controller 500 includes a drive device 508, an auxiliary storage device 502, a memory device 503, a CPU 504, an interface device 505, and the like that are connected to one another by a bus 506.

A program that realizes the processing in the controller 500 is provided by a storage medium 507. When the storage medium 507 sets the recorded program in the drive device 508, the program is installed from the storage medium 507 to the auxiliary storage device 502 via the drive device 508. However, it is not necessary to install the program from the storage medium 507, and the program may be downloaded from another computer via a network. The auxiliary storage device 502 stores the installed program, and also stores necessary files and data.

The memory device 503 reads the program from the auxiliary storage device 502, and stores the program when there is an instruction to start the program. The CPU 504 is a processor that executes a function of the controller 500 according to the program stored in the memory device 503. The interface device 505 is used as an interface for external connection.

An example of the storage medium 507 is a portable storage medium such as a compact disk read-only memory (CD-ROM), a digital versatile disc (DVD), or a universal serial bus (USB) memory. An example of the auxiliary storage device 502 is a hard disk drive (HDD) or a flash memory. Both the storage medium 507 and the auxiliary storage device 502 correspond to a computer readable storage medium.

According to the present disclosure, a control timing for cross-resonance between qubits or a readout timing from the qubits can be optimized in a configuration where a plurality of qubits for cross-resonance coupling are placed on different chips.

Although the embodiments are numbered with, for example, "first" or "second," the ordinal numbers do not imply priorities of the embodiments. Many other variations and modifications will be apparent to those skilled in the art.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A controller (301) comprising:
a control circuit (30) configured to output a control signal to cause cross-resonance between a plurality of qubits (11, 21) that are placed on different chips (10, 20), to one of the plurality of qubits;
a read circuit (40) configured to output readout signals (ro1, ro2) for performing readout from the plurality of qubits to the respective qubits (11, 21); and
an adjustment circuit (60) configured to adjust an interval between an output of the control signal (S) and outputs of the readout signals based on a delay (D) between the plurality of qubits.

2. The controller (301) according to claim 1, wherein the adjustment circuit (60) is configured to adjust a readout timing (tr) at which the readout signals (ro1, ro2) are output, based on the delay (D).

3. The controller (301) according to claim 2, wherein the adjustment circuit (60) is configured to adjust the readout timing (tr) to a timing at which data (d) obtained from the readout matches an expected value (X).

4. The controller (301) according to claim 3, wherein the adjustment circuit (60) is configured to set the readout timing to a first readout timing (tr) at which the data (d) matches the expected value (X) within a first time range in which the readout timing (tr) is varied.

5. The controller (301) according to claim 4, wherein the adjustment circuit (60) is configured to store the first readout timing, and
wherein the read circuit (40) is configured to perform the readout according to the stored first readout timing, for a subsequent readout.

6. The controller (301) according to claim 2, wherein the adjustment circuit (60) is configured to adjust a timing at which a read-in signal (ri1, ri2) to perform the readout is output, based on the delay (D).

7. The controller (301) according to any one of claims 1 to 6, wherein the adjustment circuit (60) is configured to adjust a control timing (ts) at which the control signal (S) is output, based on the delay (D).

8. The controller (301) according to claim 7, wherein the adjustment circuit (600) is configured to adjust the control timing (ts) to a timing at which data (d) obtained from the readout matches an expected value (X).

9. The controller (301) according to claim 8, wherein the adjustment circuit (60) is configured to set the control timing (ts) to a first control timing at which the data (d) matches the expected value (X) within a second time range in which the control timing (ts) is varied.

10. The controller (301) according to claim 9, wherein the adjustment circuit (60) is configured to store the first control timing, and
wherein the read circuit (40) is configured to output the control signal (S) based on the stored first control timing, for a subsequent output of the control signal (S).

11. The controller (301) according to claim 7, wherein the plurality of qubits include a control qubit (71), and
wherein the adjustment circuit (60) is configured to adjust a timing at which the control signal (S) to be input to the control qubit (71) is output, based on the delay (D).

12. The controller (301) according to any one of claims 1 to 6, wherein the adjustment circuit (60) is configured to determine whether objects for cross-resonance coupling are the plurality of qubits (11, 21), and adjust the interval based on the delay (D) upon determining that the objects are the plurality of qubits.

13. An information processing apparatus (600) comprising:
a plurality of qubits (11, 21) that are placed on different chips (10, 20);
a control circuit (30) configured to output a control signal (S) to cause cross-resonance between the qubits to one of the plurality of qubits (11, 21);
a read circuit (40) configured to output readout signals (ro1, ro2) for performing readout from the plurality of qubits to the respective qubits (11, 21); and
an adjustment circuit (60) configured to adjust an interval between the output of the control signal (S) and outputs of the readout signals (ro1, ro2) based on a delay (D) between the plurality of qubits (11, 21).

14. The information processing apparatus (600) according to claim 13, further comprising:
a first cooling apparatus (201) configured to cool a first chip (10), among the different chips, on which a control qubit (71) included in the plurality of qubits is placed;
a second cooling apparatus (202) configured to cool a second chip (20), among the different chips, on which a target qubit (72) included in the plurality of qubits is placed; and
an external line (401) that connects the first cooling apparatus (201) and the second cooling apparatus (202),
wherein the control qubit (71) and the target qubit (72) are coupled via the external line (401).

15. An information processing method comprising:
detecting a delay (D) between a plurality of qubits (11, 21) that are placed on different chips (10, 20); and
adjusting, based on the delay, an interval between:
a first timing at which a control signal (S) to cause cross-resonance between the plurality of qubits is output to one of the plurality of qubits (11, 21), and
a second timing at which readout signals (ro1, ro2) for performing readout from the plurality of qubits to respective qubits (11, 21).
